# EUROPÄISCHE PATENTANMELDUNG

(11) **EP 2 207 177 A2**
(43) Veröffentlichungstag der Anmeldung: **14.07.2010**
(21) Anmeldenummer: 09179123.6
(22) Anmeldetag: 14.12.2009
(51) Int. Cl.: G11B 11/10, G11B 11/00, G11B 5/02

(54) **Verfahren zur Speicherung digitaler Information nebst Speicherelement**

(30) Priorität: 09.01.2009 DE 102009000124
(71) Anmelder: Forschungszentrum Jülich GmbH, 52425 Jülich (DE); Institute Jozef Stefan, 1001 Ljubljana (SI); Institute of Mathematics, Physics and Mechanics, 1000 Ljubljana (SI)
(72) Erfinder: Feuerbacher, Dr. Michael, 52349, Düren (DE); Dolinsek, Prof. Dr. Janez, 1351, Brezovica pri Ljubljani (SI); Heggen, Dr. Marc, 41812, Erkelenz (DE); Jaglicic, Prof. Dr. Zvonko, 1231, Ljubljana (SI); Jagodic, Marko, 2000, Maribor (SI)
(74) Vertreter: Gille Hrabal Struck Neidlein Prop Roos

(57) **Zusammenfassung**

Die Erfindung betrifft ein Verfahren zur Speicherung digitaler Information sowie ein Verfahren zum Auslesen derart gespeicherter Information und ein kombiniertes Verfahren zur Speicherung und zum Auslesen. Die Information wird in einem Speichermedium, welches eine nicht-ergodische Phase aufweist, gespeichert, indem das Speichermedium in der nicht-ergodischen Phase monoton abgekühlt wird und zum Speichern mindestens einer logischen "1" die Abkühlrate moduliert wird. Da das nicht-ergodische Speichermedium bei jeder Temperatur ständig ein thermodynamisches Gleichgewicht anstrebt, das es auf experimentell zugänglichen Zeitskalen nicht erreichen kann, hängt es von der Abkühlrate ab, inwieweit sich im Speichermedium Ordnungszustände ausbilden. Diese Ordnungszustände können beim Auslesen der Information abgefragt werden, indem der Verlauf einer ZustandsgrÖße oder ihrer Ableitung nach der Temperatur untersucht wird. Ein Ordnungszustand macht sich als Anomalie in diesem Verlauf bemerkbar, da sein Aufbrechen Energie kostet.

## Beschreibung

Die Erfindung betrifft ein Verfahren zur Speicherung digitaler Information sowie ein Verfahren zum Auslesen derart gespeicherter Information und ein kombiniertes Verfahren zur Speicherung und zum Auslesen. Außerdem betrifft die Erfindung ein Speicherelement zur Durchführung der Verfahren.

### Stand der Technik

In herkömmlichen Speichern beispielsweise bekannt aus der Druckschrift WO 2004068499 A1, wie etwa DRAM, Festplatten und optischen Speichermedien, wird digitale Information durch lokale Einwirkung eines Stroms, eines Magnetfelds oder eines Laserstrahls auf einem Speichermedium in Form von Bits und Bytes gespeichert. Ein einzelnes Bit kann die Zustände "0" oder "1" einnehmen. Ein Byte besteht aus mehreren Bits und zwar in der Regel aus acht Bits. Ein Byte ist die kleinste Einheit binärer Daten, mit der sinnvoll gerechnet werden kann.

Die in einem herkömmlichen Speicher gespeicherte Information lässt sich somit grundsätzlich einem definierten Ort zuordnen. Besteht eine Information aus einem acht Bits umfassenden Byte, so gibt es acht verschiedene Bereiche, so zum Beispiel acht räumlich voneinander getrennte Kondensatoren im Speichermedium, die für die Speicherung des Bytes benötigt werden. Die Beschädigung eines Bereichs, also beispielsweise eines Kondensators führt zum Verlust eines Bits und damit zum Verlust der gespeicherten Information.

Nachteilig ist also das Schicksal der Information untrennbar mit dem Schicksal des Speicherorts verbunden. Der Verlust oder die Beschädigung eines Teils des Speichermediums vernichtet unwiderruflich die dort gespeicherte Information.

Herkömmliche Speicherelemente dürfen regelmäßig nicht unplanmäßig äußeren starken elektrischen oder magnetischen Feldern ausgesetzt werden, da andernfalls eine gespeicherte Information gelöscht werden könnte.

Als Speichermedium kann alternativ ein Hologramm verwendet werden. Jedes Bruchstück eines Hologramms enthält zumindest schemenhaft die gesamte in ihm hinterlegte Information. Eine mittels Hologramm gespeicherte Information bleibt regelmäßig erhalten, selbst wenn örtlich beschränkte Bereiche des Hologramms mechanisch beschädigt wurden. Eine per Hologramm gespeicherte Information kann außerdem grundsätzlich nicht durch elektrische oder magnetische Felder gelöscht werden. Ein Hologramm ist allerdings aufwändig herzustellen, da hierfür zwei kohärente Wellenzüge miteinander in Interferenz gebracht werden müssen.

### Aufgabe und Lösung

Es ist gegenüber dem beschriebenen Stand der Technik Aufgabe der Erfindung, eine alternative, einfache und zuverlässige Speichertechnik zur Verfügung zu stellen.

Diese Aufgabe wird erfindungsgemäß durch ein Verfahren zur Speicherung digitaler Information gemäß Hauptanspruch gelöst, durch ein Verfahren zum Auslesen derart gespeicherter Information gemäß Nebenanspruch sowie durch ein kombiniertes Verfahren zur Speicherung und zum Auslesen gemäß einem weiteren Nebenanspruch. Darüber hinaus wird die Aufgabe durch ein Speicherelement mit den Merkmalen eines nächsten Nebenanspruchs gelöst. Weitere vorteilhafte Ausgestaltungen ergeben sich jeweils aus den darauf rückbezogenen Unteransprüchen.

### Gegenstand der Erfindung

Im Rahmen der Erfindung wurde ein Verfahren zur Speicherung digitaler Information in einem Speichermedium, welches eine nicht-ergodische Phase aufweist, entwickelt. Bei diesem Verfahren wird das Speichermedium in der nicht-ergodischen Phase monoton abgekühlt. Das Speichermedium kühlt monoton ab, wenn die Temperatur des Speichermediums durch das Abkühlen nur kleiner wird oder konstant bleibt. Eine nicht-ergodische Phase liegt vor, wenn eine Eigenschaft des Speichermediums durch das Abkühlen erhalten und gespeichert wird und diese gespeicherte Eigenschaft vom zeitlichen Verlauf der Abkühlung abhängt.

Zum Speichern mindestens einer logischen "1 wird die Abkühlrate moduliert, also verändert und zwar im Vergleich zur Abkühlrate, die zur Speicherung einer logischen "0" angewendet wird. Wird beispielsweise zur Speicherung einer logischen "0" ausgehend von einer Temperatur T₁ linear bis zum Erreichen einer Temperatur T₂ abgekühlt, so wird zur Speicherung einer logischen "1 " demgegenüber geändert also nicht-linear abgekühlt und zwar innerhalb des gleichen Temperaturintervalls T₁ bis T₂. Beispielsweise wird zur Speicherung einer logischen "1" das Abkühlen innerhalb des Temperaturintervalls unterbrochen. Die Temperatur des Speichermediums wird also vorrübergehend konstant gehalten, bevor beginnend mit der Temperatur T₁ durch das Abkühlen die Temperatur T₂ erreicht wird.

Ist die Temperatur T₂ erreicht worden, so hängt die maßgebliche Eigenschaft also nun davon ab, auf welche Weise ausgehend von T₁ abgekühlt worden ist.

Die Eigenschaft kann eine Magnetisierung sein. Wurde also linear abgekühlt, so liegt eine andere Magnetisierung vor im Vergleich zu dem Fall, dass nicht-linear abgekühlt wurde. Die unterschiedliche Magnetisierung ermöglicht die Unterscheidung zwischen einer gespeicherten logischen "0" und einer gespeicherten logischen "1". Eine andere mögliche Eigenschaft kann die spezifische Wärme des Materials des Speichermediums sein.

Ein geeignetes Material kann elektrisch frustriert sein. Ein geeignetes Material ist dann beispielsweise ein dielektrisches dipolares Glas. Die entsprechende Eigenschaft ist dann die lokale dielektrische Polarisation. Ein weiteres geeignetes Material ist ein dielektrisches, quadrupolares Glas. In diesem Fall handelt es sich bei der Eigenschaft um den elektrischen Feldgradienten-Tensor.

Zwar dient die vorliegende Erfindung in erster Linie der Speicherung von digitaler Information. Da aber eine Information analog gespeichert wird, ist es grundsätzlich möglich, Informationen analog abzuspeichern.

Damit ein im Speichermedium hinterlegtes Bit an Information wieder ausgelesen werden kann, genügt es, unterscheiden zu können, ob am Speichermedium bzw. an einer Eigenschaft des Speichermediums eine Veränderung im Vergleich zu einem Grundzustand vorgenommen wurde (logische "1") oder nicht (logische "0"). Auf die quantitative Stärke dieser Veränderung kommt es nicht an. Somit reicht es zum Speichern einer logischen "1" aus, die minimale noch detektierbare Veränderung am Speichermedium vorzunehmen.

Dies ist von Bedeutung speziell zur Speicherung von Information in dem erfindungsgemäß verwendeten nicht-ergodischen Speichermedium. Erfindungsgemäß wird ausgenutzt, dass beim Abkühlen eines nicht-ergodischen Speichermediums die internen Bewegungen im Medium kontinuierlich langsamer werden. Das Medium strebt bei jeder Temperatur ein thermodynamisches Gleichgewicht an. Im Ganzen kann es dieses bei frustrierten Systemen wegen der Nicht-Ergodizität nicht erreichen. Frustrierte Systeme sind daher besonders zu bevorzugen. Von der Abkühlrate hängt es nun ab, bis zu welchem Grad es dem Medium gelingt, sich einem Gleichgewichtszustand zu nähern. Im Verlauf einer Abkühlung bilden sich Ordnungszustände im Speichermedium aus. Durch Modulation der Abkühlrate werden diese Ordnungszustände verändert, wodurch eine Information im Speichermedium hinterlegt wird. Diese Information ist der Temperatur zugeordnet, bei der die Modulation stattgefunden hat.

Da die Ausbildung von Ordnungszuständen ein kontinuierlicher, gradueller Prozess ist, hinterlegt bereits jede noch so kleine Modulation der Abkühlrate eine Information im Speichermedium. Die nötige Stärke und Dauer der Modulation und somit auch die erreichbare Schreibgeschwindigkeit, hängt einzig allein davon ab mit welcher Empfindlichkeit die Veränderung des Speichermediums später wieder ausgelesen werden kann. Hierbei genügt es speziell zum Auslesen digitaler Information festzustellen, ob die Abkühlrate moduliert wurde oder nicht. Es ist nicht erforderlich, weitere Information über die Modulation wiedergewinnen zu können. Digitale Information lässt sich somit besonders empfindlich auslesen, so dass eine auslesbare digitale Information besonders schnell gespeichert werden kann.

Die Information kann ohne jegliches äußeres Feld nur durch Veränderung der Temperatur im Speichermedium hinterlegt werden. Dies ist eine konzeptionelle Neuerung im Vergleich zu herkömmlichen Speicherverfahren, bei denen hierzu ein elektrisches (DRAM), magnetisches (Festplatte) oder elektromagnetisches (CD, DVD) Feld notwendig ist. Dementsprechend ist die mit dem erfindungsgemäßen Verfahren gespeicherte Information gegen derartige Felder regelmäßig unempfindlich, selbst wenn diese Felder stark zeitabhängig sind, wie etwa in der Nähe von Hochspannungsüberschlägen oder in Kernspintomographen. Auch bei ionisierender Strahlung bleibt die gespeicherte Information erhalten.

Die Modulation der Abkühlrate wirkt sich auf das gesamte Speichermedium aus, da nicht vorhersehbar ist, an welcher Stelle im Medium sich wann Ordnungszustände ausbilden. Das bedeutet zugleich, dass bei Verlust oder Beschädigung eines Teils des Speichermediums die gesamte in ihm gespeicherte Information zwar schwieriger ausgelesen werden kann, aber nicht völlig verschwindet.

Die Situation ist vergleichbar mit einem teilweise beschädigten oder zerstörten Hologramm. Beispielsweise mit Hilfe eines Lasers oder eines pinförmigen Peltierelementes ist es möglich, nur kleine Bereiche eines Substrats erfindungsgemäß zu temperieren, also in geeigneter Weise abzukühlen oder aufzuheizen. Informationen können so lokal eingegrenzt gespeichert und ausgelesen werden. Andere Bereiche, in denen keine Information oder eine andere Information abgespeichert werden soll, können in Zeit beispielsweise aktiv gekühlt werden, um verbessert lokal speichern oder auslesen zu können.

Es ist möglich, verschiedene Ordnungszustände durch das Abkühlen zu speichern, die unterschiedlichen Temperaturen zugeordnet sind, und die einer "0" oder einer "1" zugeordnet werden können. Dies ermöglicht es, mehrere Bits, so zum Beispiel ein Byte zu speichern, ohne dafür räumlich getrennte Bereiche bereitstellen zu müssen. Wird nun ein Bereich des Speichermediums beschädigt, so bleibt dennoch als Byte gespeicherte Information erhalten und kann vollständig ausgelesen werden. Natürlich kann die Zuordnung auch umgekehrt erfolgen. Eine logische "1" wird dem Fall zugeordnet, dass linear abgekühlt wurde. Eine logische "0" wird dann mit dem Fall verknüpft, dass moduliert abgekühlt wurde.

Das Material eines Speichermediums kann einen Phasenübergang zwischen einer ergodischen und einer nicht-ergodischen Phase haben. Dieser findet bei einer "Freezing-Temperatur" genannten Temperatur T_{f} statt. Unterhalb von T_{f} sind die internen Bewegungen im Medium so weit verlangsamt, dass innerhalb experimentell zugänglicher Zeiten kein vollständiges thermisches Gleichgewicht mehr hergestellt werden kann. Die Speicherung von Bits und Bytes kann dann beginnend mit der Temperatur T_{f} stattfinden. Oberhalb von T_{f} ist eine erfindungsgemäße Speicherung von Information nicht möglich.

Die bei einer gegebenen Temperatur durch Modulation der Abkühlrate gespeicherte Information bleibt so lange erhalten, wie das Speichermedium diese Temperatur nicht mehr überschreitet. Wie weit diese Temperatur überschritten werden kann, ohne die Information zu zerstören, hängt davon ab, wie stark die bei der Speicherung ausgebildeten Ordnungszustände gebunden sind. Dies ist eine charakteristische Größe des verwendeten Speichermediums.

Als deutlichste Modulation der Abkühlrate wird zum Speichern der logischen "1" die Abkühlung fur eine bestimmte Zeit unterbrochen werden, insbesondere für wenigstens eine Sekunde, vorzugsweise für wenigstens 30 Sekunden, besonders bevorzugt für wenigstens eine Minute. Soll eine logische "0" gespeichert werden, so wird linear abgekühlt. Es ist günstig, dann schnell abzukühlen. Bevorzugt wird daher das Material aktiv gekühlt, zum Beispiel mit Hilfe eines Kryostaten. Um schnell abkühlen zu können, ist es außerdem günstig, einen Kryostaten mit geringer Wärmekapazität einzusetzen. In einer besonders vorteilhaften Ausgestaltung wird ein frustriertes Speichermedium gewählt. Ein solches Speichermedium ist durch eine derartige Wechselwirkung seiner Teilchen gekennzeichnet, dass es keine Konfiguration gibt, die alle Zwangsbedingungen erfüllt und zugleich die Gesamtenergie minimiert. Es gibt mehrere energetisch günstige Zustände, von denen einer angenommen wird. Dadurch existiert in einem solchen Speichermedium ein breites Spektrum von Korrelationszeiten für die Ausbildung von Ordnungszuständen, das sich von mikroskopischen Zeiten bis zum Alter des Universums erstreckt. Die Ausbildung von Ordnungszuständen hängt somit noch stärker von der Abkühlrate ab als bei einem Speichermedium, was sich zwar in der nicht-ergodischen Phase befindet, jedoch nicht frustriert ist. Die Nichtgleichgewichtsdynamik ist in frustrierten Systemen noch ausgeprägter als in lediglich nicht-ergodischen Systemen, da auf Grund immer vorhandener Widersprüche zwischen thermodynamischem Gleichgewicht einerseits und Zwangsbedingungen des Systems andererseits das globale thermodynamische Gleichgewicht auch nach unendlicher Wartezeit nicht erreicht wird.

Beispielsweise kann vorteilhaft ein magnetisch frustriertes System, wie etwa ein Spinglas zum Beispiel bekannt aus "K. Jonason, E. Vincent, J. Hammann, J. P. Bouchaud, P. Nordblad, Phys. Rev. Lett. 81,3243(1998)", "V. Dupuis, E. Vincent, J. P. Bouchaud, J. Hammann, A. Ito, H. Aruga Katori, Phys. Rev. B 64, 174204 (2001)" oder "K. Binder, A. P. Young, Rev. Mod. Phys. 58, 801 (1986)", ein geometrisch frustrierter Antiferromagnet zum Beispiel bekannt aus "B. D. Gaulin, J. N. Reimersa T. E. Mason, J. E. Greedan, Z. Tun, Phys. Rev. Lett. 69, 3244 (1992)" sowie "A. Lafond, A. Meerschaut, J. Rouxel, J. L. Tholence, A. Sulpice, Phys. Rev. B 52, 1112(1995)", eine Vielzahl magnetischer Nanopartikel beispielsweise bekannt aus "P. Jonsson, M. F. Hansen, P. Nordblad, Phys. Rev. B 61, 1261 (2000)" sowie "O. Cador, F. Grasset, H. Haneda, J. Etourneau, J. Magn. Magn. Mater. 268, 232 (2004)", ein magnetischer Quasikristall beispielsweise bekannt aus "J. Dolinsek, Z. Jaglicic, M. A. Chernikov, I. R. Fisher, P. C. Canfield, Phys. Rev. B 64,224209(2001)" sowie "J. Dolinsek, Z. Jaglicic, T. J. Sato, J. Q. Guo, A. P. Tsai, J. Phys.: Condens. Matter 15,7981 (2003)" oder alternativ ein elektrisch frustriertes Dielektrikum, wie etwa ein orientiertes Glas oder ein ungeordnetes Ferroelektrikum als Speichermedium verwendet werden. Dabei ist der Speichereffekt in magnetisch frustrierten Systemen im Allgemeinen stärker ausgeprägt als in elektrisch frustrierten Dielektrika. So liefert etwa bei frustrierten Spinsystemen das quantenmechanische Pauli-Prinzip Zwangsbedingungen, die bestimmte Spinkonfigurationen ausschließen, darunter auch diejenigen, die einer minimalen Gesamtenergie entsprechen. Im Ausführungsbeispiel wird die Speicherung digitaler Information in der komplexen magnetisch frustrierten intermetallischen Verbindung T-Al₃(Mn,Fe) in der Taylor-Phase demonstriert.

Die Schreibgeschwindigkeit hängt davon ab, wie viele 1-Bits die Information enthält. In einer Ausführungsform der Erfindung wird eine Information daher vor dem Schreiben vorteilhaft umkodiert bzw. durch ein Kompressionsverfahren komprimiert, um so die Zahl der zu speichernden Bits zu minimieren. Insgesamt kann so die Speicherung, aber auch das Auslesen einer Information beschleunigt werden.

Im Rahmen der Erfindung wurde ein Verfahren zum Auslesen einer durch das erfindungsgemäße Verfahren gespeicherten Information entwickelt. Dabei wird das Speichermedium erwärmt und eine Messgröße, die ein Maß für eine Zustandsgröße des Speichermediums oder für die Ableitung einer solchen Zustandsgröße nach der Temperatur ist, in Abhängigkeit der Zeit oder der Temperatur gemessen. Eine Anomalie im Verlauf dieser Messgröße wird als Anzeichen dafür gewertet, dass während des vorherigen Abkühlens bei der aktuell vorliegenden Temperatur eine Modulation der Abkühlrate stattgefunden hat. Die Anomalie wird daher zweckmäßig als logische "1" gewertet, die der Temperatur zugeordnet ist, bei der sie auftritt.

Die Messgröße kann beispielsweise die Magnetisierung des Speichermediums sein. Damit ein Speichermedium mit darin durch das erfindungsgemäße Verfahren eingebrachten magnetischen Ordnungszuständen eine makroskopische Magnetisierung zeigt, ist es in der Regel erforderlich, ein äußeres Magnetfeld vorzulegen. Alternativ oder auch in Kombination kann die spezifische Wärme als Messgröße gewählt werden. Die Messung der spezifischen Wärme benötigt kein äußeres Feld. Sie kann beispielsweise mit einem Kalorimeter durchgeführt werden.

Vorteilhaft wird eine lokale Verlangsamung des Verlaufs der Messgröße mit der Zeit oder mit der Temperatur als Anomalie gewertet. Eine solche Verlangsamung ist ein Anzeichen dafür, dass bei der aktuell vorliegenden Temperatur Ordnungszustände im Speichermedium vorliegen. Um diese Ordnungszustände aufzubrechen, wird Energie benötigt, die zum weiteren Vorantreiben des Verlaufs der Messgröße fehlt.

In einer weiteren vorteilhaften Ausgestaltung der Erfindung wird eine Ableitung des Verlaufs der Messgröße nach der Temperatur gebildet. Diese Art der Signalverarbeitung ist dazu geeignet, eine Verlangsamung des Verlaufs der Messgröße mit der Temperatur besonders gut zu verdeutlichen und von einem Untergrund zu unterscheiden.

Der Verlauf der Messgröße kann nicht nur absolut ausgewertet werden, sondern auch relativ zu einem Referenzverlauf, der sich ergibt, wenn das Speichermedium kontinuierlich durch den Bereich hindurch abgekühlt wurde, in dem es für die Speicherung genutzt werden soll. Die Erfindung bezieht sich also auch auf ein Verfahren zur Speicherung digitaler Information in einem Speichermedium, welches eine nicht-ergodische Phase aufweist, und zum Auslesen dieser Information. Dieses Verfahren weist folgende Schritte auf:
1. Das Speichermedium wird in der nicht-ergodischen Phase kontinuierlich durch den Temperaturbereich hindurch abgekühlt, in dem es für die Speicherung genutzt werden soll;
2. das Speichermedium wird durch diesen Temperaturbereich hindurch erwärmt, wobei eine Messgröße, die ein Maß für eine Zustandsgröße des Speichermediums oder für die Ableitung einer solchen Zustandsgröße nach der Temperatur ist, in Abhängigkeit der Zeit oder der Temperatur gemessen und als Referenzverlauf aufgezeichnet wird;
3. die Information wird mit dem erfindungsgemäßen Speicherverfahren gespeichert;
4. die Information wird mit dem weiteren erfindungsgemäßen Ausleseverfahren ausgelesen, wobei die Differenz zwischen dem Verlauf der Messgröße und dem Referenzverlauf für die Erkennung von Anomalien im Verlauf ausgewertet wird.

Bei diesem Verfahren sind vorteilhaft Temperaturabhängigkeiten der Messgröße, die nicht von einer Speicherung von Information im Speichermedium herrühren, im gemessenen Signal stark unterdrückt. Es können somit kleinere Veränderungen des Speichermediums durch die Speicherung von Information noch zuverlässig ausgelesen werden. Bei einer gegebenen Verlässlichkeit, mit der sich die Information noch auslesen lassen muss, kann die Information daher wesentlich schneller in dem Speichermedium hinterlegt werden.

Es ist erfindungsgemäß günstig, Temperaturveränderungen exakt einstellen und regeln zu können. Eine Vorrichtung zur Durchführung des Verfahrens für das Speichern oder Auslesen umfasst daher vorzugsweise einen Kryostaten und zwar vorzugsweise einen Kryostaten, der mit Hilfe von kontinuierlich fließendem, flüssigem Helium gekühlt wird. Gewünschte Temperaturregelungen gelingen so auf besonders geeignete Weise. Weiter umfasst eine erfindungsgemäße Vorrichtung einen Temperatursensor. Sollen Temperaturen von 2 K an aufwärts eingestellt werden, so eignet sich als Temperatursensor ein Thermoelement oder ein Carbon-Glas-Widerstandsthermometer. Für Temperaturen oberhalb von 30 K ist ein PT100-Widerstandsthermometer geeignet. Um Auslesen zu können, umfasst eine erfindungsgemäße Vorrichtung typischerweise einen Magneten mit geringer Magnetfeldstärke von wenigen Oersted. Es kann ein Elektromagnet sein. Um gesteuert abkühlen zu können, umfasst die Vorrichtung vorzugsweise wenigstens ein dafür eingesetztes Peltierelement. Das Material, in dem gespeichert wird, befindet sich bevorzugt in einer Vakuum isolierten Kammer. Die Vorrichtung umfasst ein Kalorimeter, wenn kalorimetrisch ausgelesen werden soll.

### Spezieller Beschreibungsteil

Nachfolgend wird der Gegenstand der Erfindung anhand von Figuren näher erläutert, ohne dass der Gegenstand der Erfindung dadurch beschränkt wird. Es ist gezeigt:
Figur 1 :
   - Temperatur-Zeit-Verlauf einer Ausführungsform des Verfahrens zum Speichern von Information (obere Abbildung a);
   - Gang der Magnetisierung mit der Temperatur ohne (Kurve 1 in mittlerer Abbildung b) und mit (Kurve 2 in Teilbild b) vorherigem Einschreiben dreier Bits;
   - Differenz zwischen den Kurven 1 und 2 von Teilbild b (untere Abbildung c).
Figur 2:
   - Gang bzw. Verlauf der Magnetisierung mit der Temperatur nach dem Schreiben von acht "1 "-Bits: Differenz zum Referenzverlauf der Magnetisierung (obere Abbildung a);
   - Aufbereitung des Signals durch Bildung der negativen zweiten Ableitung (untere Abbildung b).
Figur 3:
   Zusammenstellung von verschiedenen ASCII Codes, die erfindungsgemäß gespeichert wurden und zwar zum einen der Verlauf der der Magnetisierung in Abhängigkeit von der Temperatur in der linken Abbildung sowie zum anderen eine Aufbereitung der Signale durch Bildung der negativen zweiten Ableitung (rechte Abbildung b).

In dem Ausführungsbeispiel wurde eine einkristalline T-Al₃(Mn,Fe) Probe mit den Abmessungen 2x 1 x 1 mm³ und der Zusammensetzung Al_{72,5}Mn_{21,5}Fe_{6,0} verwendet. Die Probe muss aber nicht notwendig ein Einkristall sein. Die Mangan- und Eisenatome bilden ein Netzwerk lokalisierter Spins, die im Wesentlichen antiferromagnetisch gekoppelt sind. Magnetisierungsmessungen haben ergeben, dass die nicht-ergodische Phase unterhalb der "Freezing-Temperatur" T_{f} von 29 K beginnt. Diese Temperatur begrenzt den Temperaturbereich nach oben, in dem mit dem erfindungsgemäßen Verfahren Information in dem Kristall gespeichert werden kann.

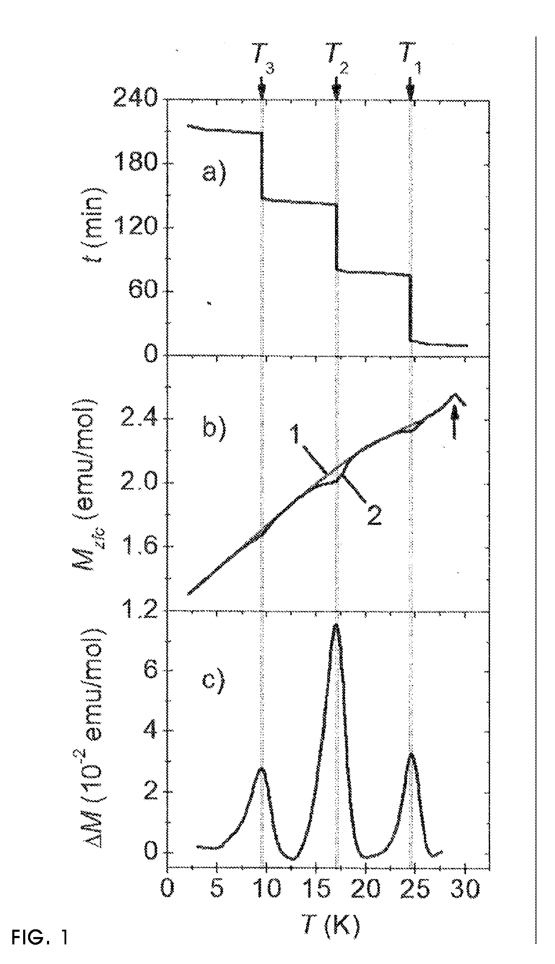

Figur 1 a zeigt das Temperatur-Zeit-Profil, dem der Kristall zum Einschreiben dreier Bits digitaler Information ausgesetzt wurde. Der Kristall wurde kontinuierlich abgekühlt. Bei den Temperaturen T₁, T₂ und T₃ wurde die Abkühlung jedoch jeweils für etwa eine Stunde unterbrochen, d.h., es wurde isotherm gewartet. Während des gesamten Abkühlvorgangs wurde kein äußeres elektrisches oder magnetisches Feld vorgelegt ("zero field cooling", zfc). Für die Abwesenheit dieser Felder wurden äußere magnetische Felder wie das Erdmagnetfeld abgeschirmt. Die Abkühlrate betrug 5K/min.

Während des kontinuierlichen Abkühlens hat das nicht-ergodische Spinsystem keine Zeit, bei irgendeiner Temperatur ein energetisch günstiges thermodynamisches Gleichgewicht anzunehmen, nicht einmal lokal. Somit gefrieren die Spins in zufälliger Anordnung in einer metastabilen Spinglas-Anordnung. Die Kopplungen der Spins untereinander und damit auch die Energien, die erforderlich sind, um einzelne Spins umzuklappen, sind statistisch verteilt. Ein Spin ist nicht mehr beweglich ("gefriert"), wenn die thermische Energie k_{B}*T kleiner wird als die elektrostatische Austauschenergie, die erforderlich ist, um in einer frustrierten Anordnung einen Spin umzuklappen. Beim kontinuierlichen Abkühlen "gefrieren" stärker gekoppelte Spins zuerst, schwächer gekoppelte dagegen erst bei tieferen Temperaturen. Bei einer Unterbrechung des Abkühlvorgangs in der Größenordnung von Minuten bis Stunden versuchen diejenigen Spins, die noch beweglich sind, ein energetisch günstiges thermisches Gleichgewicht (im Wesentlichen antiferromagnetische Anordnung) untereinander und mit den bereits "gefrorenen" Spins einzunehmen. Auf diese Weise bilden sich im Speichermedium magnetische Domänen mit einem Quasi-Gleichgewichtszustand, auch Spintropfen genannt, als Ordnungszustände aus.

Wird der Abkühlvorgang fortgesetzt, bleiben diese Ordnungszustände zumindest teilweise erhalten. Wurde ein Spintropfen bei einer Temperatur T₁ ausgebildet, so sind diejenigen Spins, für deren Umklappen eine Energie von etwa K_{B}*T₁ erforderlich ist, unterhalb von T₁ nicht mehr beweglich. Schwächer gekoppelte Spins können dagegen durchaus noch umgeklappt werden und erst bei einer tieferen Temperatur unbeweglich werden.

Diese Speicherprozedur wurde bei den Temperaturen T₂ und T₃ wiederholt, In dem verwendeten Speichermedium können bei jeder Temperatur unterhalb der "Freezing-Temperatur" T_{f} Spintropfen erzeugt werden, da die Stärken der Austauschkopplungen zwischen den Spins kontinuierlich verteilt sind. Jeder bei einer gegebenen Temperatur ausgebildete Spintropfen enthält Informationen sowohl über diese Temperatur als auch über die Zeit, die ihm zu seiner Ausbildung gelassen wurde.

Die bei einer Temperatur Tᵢ gespeicherte Information bleibt so lange stabil, wie diese Temperatur Tᵢ nicht mehr überschritten wird. Wird im Folgenden die Temperatur noch einmal auf genau Tᵢ erhöht, wird die Information noch nicht zerstört, da etwas mehr als k_{B}*Tᵢ an thermischer Energie erforderlich ist, um die lokale magnetische Ordnung in den Spintropfen aufzubrechen. Damit das Gitter genug thermische Energie liefern kann, um die Ordnung aufzubrechen und die Information zu löschen, sollte die Temperatur etwa um weitere 2 K erhöht werden.

Zum Auslesen der Information wurde ein schwaches statisches Magnetfeld von etwa 4 Oersted angelegt. Das Speichermedium wurde kontinuierlich erwärmt, und seine Magnetisierung wurde gemessen. Ohne das äußere Feld zeigen weder die ungeordneten Spins im Spinglas noch die quasi-geordneten Spintropfen eine spontane Magnetisierung.

Figur 1b zeigt den Verlauf der Magnetisierung in Abhängigkeit der Temperatur. Kurve 1 entstand nach einer kontinuierlichen Abkühlung des Speichermediums durch den Temperaturbereich, in dem eine Datenspeicherung beabsichtigt war, und ist daher ein Referenzverlauf der Magnetisierung. Kurve 2 entstand nach der oben beschriebenen Speicherung dreier Bits bei den Temperaturen T₁, T₂ und T₃ entsprechend der Figur 1a.

Durch das äußere Feld orientieren sich mit steigender Temperatur immer mehr der antiferromagnetisch gekoppelten Spins in Feldrichtung, um ihre Zeeman-Energie zu minimieren, so dass sich eine Magnetisierung M_{zfc} ausbildet. Je höher die Temperatur ist, desto stärker tragen gekoppelte Spins zu M_{zfc} bei. M_{zfc} nimmt daher kontinuierlich bis zu einem durch Pfeil markierten Knick bei der "Freezing-Temperatur" T_{f} zu. Bei dieser Temperatur wird das Speichermedium ergodisch.

In Kurve 2 der Figur 1b machen sich die bei den Temperaturen T₁, T₂ und T₃ eingeschriebenen Bits nun dadurch bemerkbar, dass der Verlauf bzw. Gang von M_{zfc} mit der Temperatur lokal verlangsamt ist. Ursache hierfür ist, dass bei diesen drei Temperaturen Tᵢ die thermische Energie k_{B}*Tᵢ jeweils gerade noch nicht ausreicht, um die in bei der jeweiligen Temperatur gebildeten Spintropfen (Ordnungszuständen) etwas stabiler gebundenen Spins umzuorientieren. Diese Spins tragen daher erst bei etwas höheren Temperaturen zur Magnetisierung M_{zfc} bei. Eine solche Anomalie wird beim Auslesen beispielsweise als logische "1" " gewertet.

In Figur 1c ist die Differenz ΔM zwischen den Kurven 1 (Referenzverlauf) und 2 aus Figur 1b aufgetragen. In dieser Auftragung machen sich die bei den Temperaturen T₁, T₂ und T₃ geschriebenen Bits als resonante Peaks bemerkbar. Die große Deutlichkeit des Signals in diesem Demonstrationsexperiment zeigt, dass für eine technische Anwendung der Erfindung die Modulation der Abkühlrate bei der Speicherung der Bits noch wesentlich beschleunigt werden kann, ehe das Signal beim Auslesen zu schwach für eine verlässliche Auswertung wird.

Zur Speicherung eines kompletten Bytes (beziehungsweise eines ASCII-Zeichens Text) an Information wurde der Temperaturbereich unterhalb von T_{f}, in dem das Speichermedium nicht-ergodisch ist, in diskrete Temperaturintervalle AT mit einer Breite von jeweils 2,5 K aufgeteilt. Die Zentren dieser Intervalle wurden bei Tᵢ=27 K, 24,5 K, 22 K, 19,5 K, 17 K, 14,5 K, 12 Kund 9,5 K festgelegt (i=1,...,8, T₁=27 K, T₈ = 9,5 K). Jedem dieser Zentren entspricht ein Bit an Information. Das Speichermedium wurde im Kryostaten eines SQUID-Magnetometers durch diesen kompletten Temperaturbereich hindurch ausgehend von T= 31 K > T_{f} kontinuierlich mit einer Rate von 2 K/min bis etwas unterhalb von 8 K gekühlt, wobei der genau gewählte Endpunkt keinen messbaren Einfluss auf das Ergebnis hatte. Um ein Bit i auf 0 zu setzen, wurde die kontinuierliche Kühlung bei Tᵢ fortgesetzt. Um ein Bit i auf 1 zu setzen, wurde die Temperatur Tᵢ für etwa eine Stunde gehalten. Drei Unterbrechungen der Abkühlung bei 24,5 K, 17 K und 1 2 K etwa schreiben das Byte 01001010.

Da Spintropfen sich zufällig irgendwo im Kristall bilden können, ist die Information räumlich nicht lokalisiert. Ein Bit ist lediglich einer Temperatur zugeordnet. Durch das Erwärmen beim Auslesen werden die Bits der Reihe nach abgefragt. Liegt bei der einem Bit zugeordneten Temperatur eine metastabile Spinglas-Ordnung vor, entspricht dies einer 0. Liegt dagegen eine stabilere antiferromagnetische Ordnung vor, die durch Zuführung von Energie aus dem Gitter aufgebrochen werden muss, entspricht dies einer 1.
Die Information wird durch das Erwärmen beim Auslesen zwar irreversibel zerstört, das Speichermedium kann danach aber sofort wieder für eine erneute Speicherung verwendet werden.

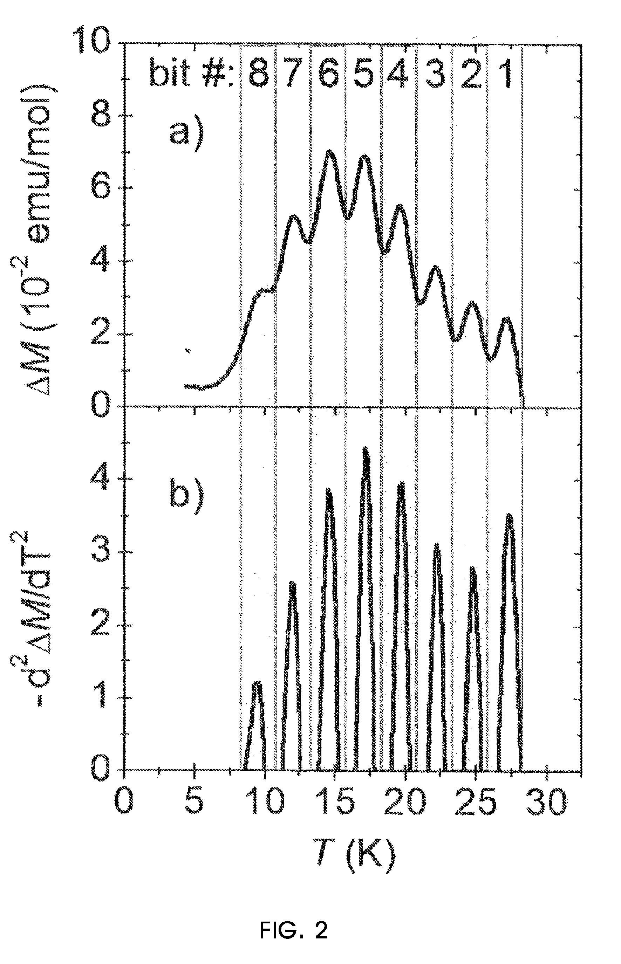

Figur 2a zeigt das Differenzsignal ΔM (analog Figur 1c) zwischen einem Referenzverlauf der Magnetisierung beim Erwärmen des Speichermediums ohne vorheriges Schreiben von Information und einem nach dem Schreiben des Bytes 11111111 erhaltenen Verlauf der Magnetisierung. Für jedes zuvor geschriebene Bit ist ein klarer Peak im Verlauf der Magnetisierung zu erkennen.

Auf Grund der geringen Breite der Temperaturintervalle von nur 2,5 K überlappen sich die endlich breiten Peaks teilweise, und die Grundlinie ist nicht sehr stark ausgeprägt. Wird die negative zweite Ableitung - d²ΔM/dT² gebildet und werden die negativen Anteile abgeschnitten, ergibt sich dagegen ein eindeutiges Muster mit klar voneinander getrennten Peaks und sehr gut ausgeprägter Grundlinie (siehe Figur 2b). Diese Art der Datenaufbereitung beim Auslesen erhöht somit die Speicherdichte auf der Temperaturachse, die bei der Speicherung der

Information sinnvollerweise gewählt werden kann.

Eine Wartezeit von bis zu 20 Stunden zwischen dem Ende des Abkühlens und dem Beginn des Auslesens führte zu keiner beobachtbaren Verschlechterung der gespeicherten Information.

Eine leichte Erhöhung des Anteils des Übergangsmetalls im Kristall schiebt T_{f} zu höheren Temperaturen, so dass entweder mehr Bits oder die gleiche Anzahl Bits mit besonders breiten Temperaturintervallen und damit in besserer Qualität geschrieben werden können.

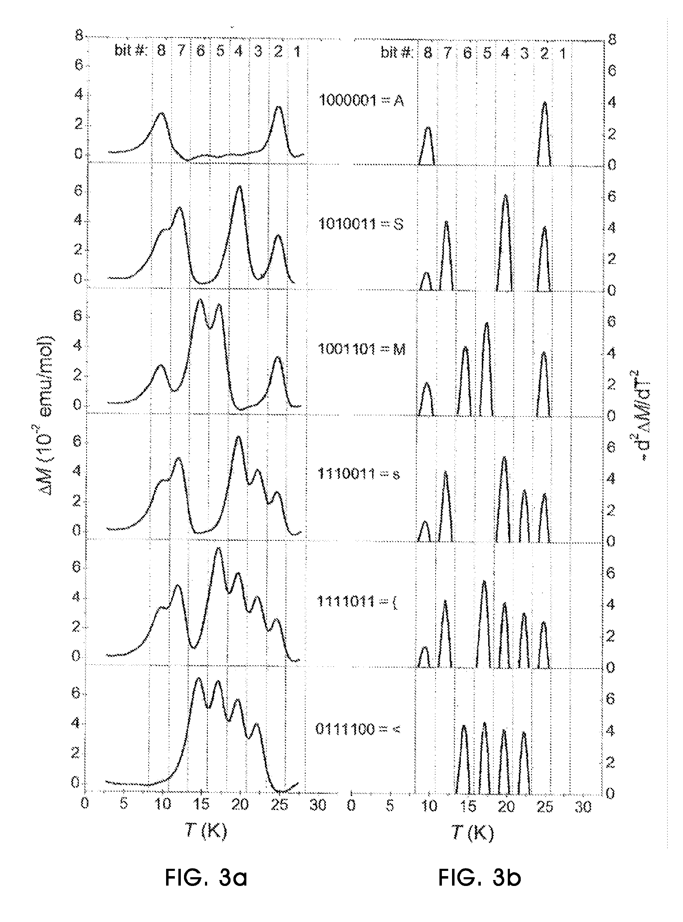

Figur 3 zeigt Beispiele von gespeicherten sieben Bits umfassenden ASCII Codes. Wird ein erstes Bit der Konvention entsprechend auf Null gesetzt, so sind gemäß Figur 3 die Buchstaben/ Zeichen A=010000001, S=01010011, M=01001101, s=01110011, {=01111011 und <=00111100 gespeichert worden. Das erste Bit findet sich bei einer Temperatur von 27K und das letzte bei einer Temperatur von 9,5K.

## Patentansprüche

1. Verfahren zur Speicherung digitaler Information in einem Speichermedium, welches eine nicht-ergodische Phase aufweist, **dadurch gekennzeichnet, dass** das Speichermedium in der nicht-ergodischen Phase monoton abgekühlt wird und zum Speichern mindestens einer logischen "1" die Abkühlrate moduliert wird.

2. Verfahren nach Anspruch 1, **dadurch gekennzeichnet, dass** zum Speichern der logischen "1" die Abkühlung unterbrochen wird.

3. Verfahren nach Anspruch 2, **dadurch gekennzeichnet, dass** die Abkühlung für wenigstens eine Sekunde unterbrochen wird.

4. Verfahren nach einem der Ansprüche 1 bis 3, **dadurch gekennzeichnet, dass** ein magnetisch frustriertes System oder ein elektrisch frustriertes Dielektrikum als Speichermedium gewählt wird.

5. Verfahren zum Auslesen einer durch ein Verfahren nach einem der Ansprüche 1 bis 4 gespeicherten Information, **dadurch gekennzeichnet, dass** das Speichermedium erwärmt wird und dabei eine Messgröße, die ein Maß für eine Zustandsgröße des Speichermediums oder für die Ableitung einer solchen Zustandsgröße nach der Temperatur ist, in Abhängigkeit der Zeit oder der Temperatur gemessen wird, wobei mindestens eine Anomalie im Verlauf der Messgröße als logische "1" " gewertet wird.

6. Verfahren nach Anspruch 5, **dadurch gekennzeichnet, dass** eine lokale Verlangsamung des Gangs der Messgröße mit der Zeit oder mit der Temperatur als Anomalie gewertet wird.

7. Verfahren zur Speicherung digitaler Information in einem Speichermedium, welches eine nicht-ergodische Phase aufweist, und zum Auslesen dieser Information, mit den Schritten:
das Speichermedium wird in der nicht-ergodischen Phase kontinuierlich durch den Temperaturbereich hindurch abgekühlt, in dem es für die Speicherung genutzt werden soll;
das Speichermedium wird durch diesen Temperaturbereich hindurch erwärmt, wobei eine Messgröße, die ein Maß für eine Zustandsgröße des Speichermediums oder für die Ableitung einer solchen Zustandsgröße nach der Temperatur ist, in Abhängigkeit der Zeit oder der Temperatur gemessen und als Referenzverlauf aufgezeichnet wird;
die Information wird gemäß Verfahren nach einem der Ansprüche 1 bis 4 gespeichert;
die Information wird gemäß Verfahren nach einem der Ansprüche 5 bis 6 ausgelesen, wobei die Differenz zwischen dem Verlauf der Messgröße und dem Referenzverlauf für die Erkennung von Anomalien im Verlauf ausgewertet wird.

8. Verfahren nach einem der Ansprüche 5 bis 7, **dadurch gekennzeichnet, dass** die Magnetisierung und/oder die spezifische Wärme als Messgröße gewählt wird.

9. Verfahren nach einem der Ansprüche 5 bis 8, **dadurch gekennzeichnet, dass** eine Ableitung des Verlaufs der Messgröße nach der Temperatur gebildet wird.

10. Verfahren zum Speichern und/ oder Auslesen von Information insbesondere nach einem der vorhergehenden Ansprüche, bei dem eine Information durch montones Abkühlen eines Speichermediums gespeichert wird und/ oder eine gespeicherte Information durch Erwärmen und Messen einer physikalischen Eigenschaft des Speichermediums ausgelesen wird.

11. Verfahren nach einem der vorhergehenden Ansprüche, bei dem ein Byte gespeichert und/oder ausgelesen wird.

12. Vorrichtung mit einem Speichermedium zur Speicherung digitaler Information in dem Speichermedium, bestehend aus einem Material mit einer nicht-ergodischen Phase, **dadurch gekennzeichnet, dass** die Vorrichtung Mittel umfasst, um das Speichermedium in der nicht-ergodischen Phase monoton abkühlen und zum Speichern mindestens einer logischen "1" " die Abkühlrate modulieren zu können.

13. Vorrichtung nach dem vorhergehenden Anspruch mit Steuerungsmitteln zur Abspeicherung von einem Byte.

14. Vorrichtung nach einem der beiden vorhergehenden Ansprüche mit Mitteln zum Auslesen der digital gespeicherten Information.

15. Vorrichtung nach einem der drei vorhergehenden Ansprüche umfassend einen mit Helium gekühlten Kryostaten für die Kühlung des Speichermediums.

16. Vorrichtung nach einem der vier vorhergehenden Ansprüche mit einem Thermoelement, einem Carbon-Glass-Widerstandthermometer oder einem PT100-Widerstandsthermometer für die Messung der Temperatur des Speicherelements.

17. Vorrichtung nach einem der fünf vorhergehenden Ansprüche mit einem Kalorimeter für das Auslesen einer gespeicherten Information.

18. Vorrichtung nach einem der sechs vorhergehenden Ansprüche mit einem Magneten für die Erzeugung eines schwachen Magnetfeldes.

19. Vorrichtung nach einem der sieben vorhergehenden Ansprüche mit einer vakuumdichten Kammer, in der sich das Speichermedium befindet.

20. Vorrichtung nach einem der acht vorhergehenden Ansprüche mit einem Peltierelement oder einem Laser für die Temperatursteuerung des Speicherelements.
